# EUROPÄISCHE PATENTANMELDUNG

(11) **EP 0 543 100 A1**
(43) Veröffentlichungstag der Anmeldung: **26.05.1993**
(21) Anmeldenummer: 92115373.0
(22) Anmeldetag: 09.09.1992
(51) Int. Cl.: B65G 53/16, B01J 8/00

(54) **Verfahren und Vorrichtung zum Austragen von Feststoff**

(30) Priorität: 16.11.1991 DE 4137853
(71) Anmelder: Deutsche Babcock Energie- und Umwelttechnik Aktiengesellschaft, D-46049 Oberhausen (DE)
(72) Erfinder: Möllenhoff, Horst, Dr., W-4330 Mülheim/Ruhr (DE); Wegelin, Rüdiger, W-4600 Dortmund 30 (DE)
(74) Vertreter: Müller, Jürgen, Dipl.-Ing.

(57) **Zusammenfassung**

Die in einer fallenden Leitung (1) zum Austragen von Feststoff vorhandene Säule des Feststoffes wird durch Einblasen von Fluidisierungsgas teilweise fluidisiert. Dadurch wird der Feststoff in Abhängigkeit von der zu fördernden Menge soweit bis in eine Förderleitung (3) ausgedehnt, daß der Feststoff von Fördergas erfaßt und pneumatisch durch die Förderleitung (3) gefördert wird.

## Beschreibung

Die Erfindung betrifft ein Verfahren und eine Vorrichtung zum Austragen von Feststoff aus einer fallenden Leitung und zum dosierten Einbringen in eine Förderleitung nach dem Oberbegriff der Patentansprüche 1 und 3.

Es sind sogenannte nichtmechanische Feststoffventile (fluid valve) bekannt, deren Wirkungsweise darauf beruht, daß eine Teilmenge einer Feststoffschicht durch Einblasen eines Gases fluidisiert wird. Bei diesen Ventilen dient die stehende Säule des Feststoffes als Abdichtung gegenüber der Atmosphäre, während über die Menge an Fluidisierungsgas die abgeführte Feststoffmenge gesteuert wird. Ein solches nichtmechanisches Feststoffventil ist z. B. das L-Ventil, das aus einer Falleitung besteht, die nach Art eines L über einen Knick in eine waagerechte Leitung übergeht. In den Knick der Leitung wird über eine Düse ein Gas zur begrenzten Fluidisierung des Feststoffes eingeblasen. Auf diese Weise wird Feststoff in einer von der Fluidisierungsgasmenge abhängigen Menge und mit einer hohen Suspensionsdichte gefördert. Ein L-Ventil ist z. B. in der Rückführleitung zwischen einem Aschebunker und der Wirbelschicht einer Wirbelschichtfeuerung angeordnet (EP-OS 158 003, EP-OS 124 842) und dient der kontrollierten Rückführung von Feststoff in die Wirbelschicht.

Weiterhin ist als ein nichtmechanisches Feststoffventil ein fluidisierbarer Feststoffsiphon bekannt (EP-OS 362 551), der mit einer einstellbaren Menge an Fluidisierungsgas beaufschlagt ist. Dieser Siphon ist in der Feststoffrückführleitung zwischen dem Fallrohr eines Abscheidezyklons und einer Wirbelschichtfeuerung angeordnet und dient der dosierten Rückführung des Feststoffes. Die bekannten nichtmechanischen Feststoffventile sind aufgrund dessen, daß sie den Feststoff in hoher Suspensionsdichte bis hin zu einer bewegten Schüttung fördern, nur in der Lage, den Feststoff über eine kurze waagerechte oder leicht ansteigende Strecke oder in eine nach unten gerichtete Fallstrecke zu fördern. Es ist auch bekannt, Feststoff aufgrund einer Druckdifferenz durch eine Leitung pneumatisch zu fördern, wobei zur Einleitung des Fördervorganges Gas in die Leitung eingeblasen wird.

Der Erfindung liegt die Aufgabe zugrunde, die gattungsgemäße Vorrichtung und das gattungsgemäße Verfahren so zu gestalten, daß ihr Anwendungsbereich in der Weise erweitert wird, daß der Feststoff in beliebiger Suspensionsdichte und über längere Strecken auch in steigenden Leitungen gefördert werden kann.

Diese Aufgabe wird bei einem gattungsgemäßen Verfahren erfindungsgemäß durch die kennzeichnenden Merkmale des Patentanspruches 1 gelöst. Eine Vorrichtung zur Durchführung des Verfahrens ist in dem Patentanspruch 3 angegeben. Vorteilhafte Ausgestaltungen der Erfindung sind Gegenstand der Unteransprüche.

Bei der Anwendung der Erfindung wird durch Fluidisierung eine Ausdehnung des Feststoffes bis in den Bereich erreicht, in den das Fördergas eingeblasen wird. Dieser Teil der Feststoffmenge, die durch die Fluidisierung ständig nachgeliefert wird, wird von dem Fördergas erfaßt und pneumatisch durch die Förderleitung ausgetragen. Dabei dient das zugeführte Fluidisierungsgas dazu, die Menge an auszutragendem Feststoff zu dosieren, während das Fördergas die Aufgabe der pneumatischen Förderung der dosierten Feststoffmenge übernimmt. Wird mit einer konstanten Gesamtgasmenge gearbeitet, die mengenmäßig auf die Fluidisierung und die Förderung aufgeteilt wird, ergibt sich eine gleichmäßige Geschwindigkeit der pneumatischen Förderung. In dem Fall, daß kein Feststoff ausgetragen werden soll und demgemäß kein Gas zur Fluidisierung verwendet wird, entfällt das insgesamt zugeführte Gas auf den Fördergasanteil, der auf diese Weise dafür sorgt, daß die Förderleitung frei von etwa zurückfließendem Feststoff gehalten wird.

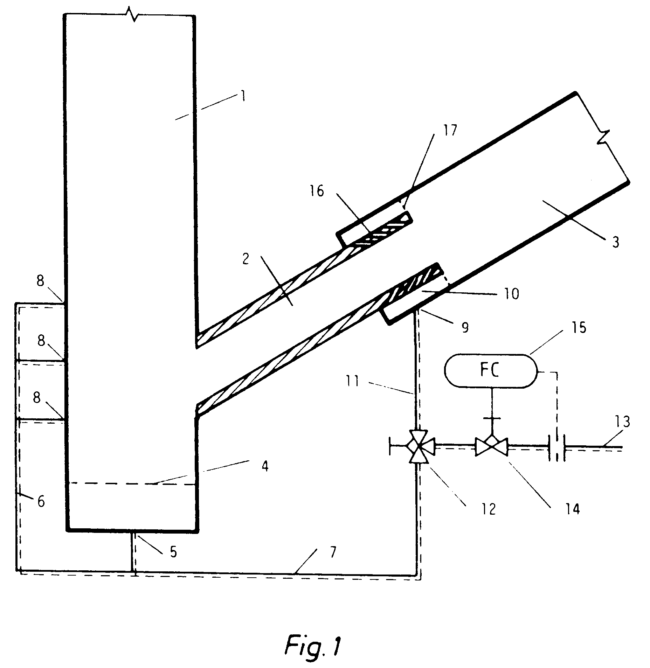

Mehrere Ausführungsbeispiele der Erfindung sind in der Zeichnung dargestellt und werden im folgenden näher erläutert. Es zeigen
- Fig. 1: schematisch eine Vorrichtung zum Austragen von Feststoff und
- Fig. 2: schematisch eine Vorrichtung zum Austragen von Feststoff gemäß einer anderen Ausführungsform.

Von einem nicht dargestellten Wirbelschichtreaktor, einem Zwischenbehälter, einem Feststoffaustrag eines Abscheidezyklons, oder einem sonstigen Feststoffsammelraum mit einem genügend hohen Feststoffniveau innerhalb eines Wirbelschichtsystems geht eine fallende Leitung 1 aus, über die der Feststoff in Form einer rutschenden Schüttung ausgetragen wird. Die in der fallenden Leitung 1 vorhandene Feststoffsäule dient gleichzeitig als Abdichtung gegenüber dem vorgeschalteten Aggregat. An die fallende Leitung 1 ist über eine Zwischenleitung 2 eine Förderleitung 3 derart unter einem Winkel angeschlossen, daß eine Umlenkung entsteht und über die fallende Leitung 1 bei Fehlen weiterer Einrichtungen ein Durchfließen des Feststoffs in die Förderleitung 3 hinein verhindert wird. Die Oberfläche des Feststoffes bildet dann innerhalb der schräg nach oben geneigten Zwischenleitung 2 einen bestimmten, zur Horizontale geneigten Schüttwinkel aus.

Unterhalb des Abzweigs der Zwischenleitung 2 ist ein mit Durchtrittsbohrungen versehener Anström- oder Verteilboden 4 angeordnet. Der Raum unterhalb des Verteilbodens 4 ist mit einem Gasanschluß 5 versehen, der mit einer Zuleitung 7 für ein Gas verbunden ist. Das über die Zuleitung 7 dem Verteilboden 4 zugeführte Gas dient dazu, die Feststoffschicht oberhalb des Verteilbodens 4 zu fluidisieren, wodurch die Oberfläche der zunächst ruhenden Feststoffschicht bis in die Förderleitung 3 hinein angehoben wird. Als Fluidisierungsgas wird vorzugsweise Luft oder Rauchgas verwendet. Alternativ zu dem Verteilboden 4 kann die Feststoffschicht im unteren Teil der fallenden Leitung 1 auch durch eine Gaszufuhr über einen oder mehrere in unterschiedlichen Höhen vorgesehene Gasanschlüsse 8 fluidisiert werden, die auf der der Zwischenleitung 2 abgewandten Seite in der Seitenwand der fallenden Leitung 1 angeordnet sind. Die Gasanschlüsse 8 sind ebenfalls an eine Zuleitung 6 für das Gas angeschlossen.

Zwischen der Zwischenleitung 2 und der Förderleitung 3 ist eine mit einem Gasanschluß 9 versehene Ringkammer 10 angeordnet, die mit zur Förderleitung 3 hin offenen Durchtrittbohrungen 16, 17 versehen ist.

Die Durchtrittbohrungen können als schräg in die Förderrichtung weisende Bohrungen in der Wand der Zwischenleitung 2 angebracht oder in der Stirnwand der Ringkammer 10 angeordnet sein. Der zu der Ringkammer 10 führende Gasanschluß 9 ist an eine Zuleitung 11 für ein Gas angeschlossen. Das über diese Zuleitung 11 in die Ringkammer 10 zugeführte und aus den Durchtrittbohrungen 16, 17 austretende Gas dient zur pneumatischen Förderung des Feststoffes aus der teilweise fluidisierten Feststoffschicht.

Die zu dem Verteilboden 4 oder den Gasanschlüssen 8 führende Zuleitung 6 oder 7 und die zu der Ringkammer 10 führende Zuleitung 11 sind über ein als Dreiwegeventil ausgebildetes Verteilventil 12 an eine gemeinsame Gasleitung 13 angeschlossen. In der gemeinsamen Gasleitung 13 ist ein Zuteilventil 14 angeordnet, das mit einem Durchflußregler 15 verbunden ist.

An dem Zuteilventil 14 wird eine konstante Gasmenge eingestellt, die über das Verteilventil 14 auf die Leitungen 6 oder 7 und 11 verteilt wird. Durch die über den Verteilboden 4 oder die Gasanschlüsse 8 eingebrachte Teilmenge des Gases wird die Feststoffschicht in dem unteren Teil der fallenden Leitung 1 und in der Zwischenleitung 2 teilweise fluidisiert. Ein Teil des fluidisierten Feststoffes gelangt in den Bereich der Durchtrittsbohrungen 16, 17 der Ringkammer 10 und wird von der durch die Durchtrittsbohrungen 16 oder 17 eingeblasenen Gasmenge erfaßt und durch die Förderleitung 3 pneumatisch ausgetragen. Dabei dient der Verteilboden 4 oder die Gasanschlüsse 8 als Zuteilorgan, indem über die Zuleitung 6 oder 7 soviel Gas zugeführt wird, daß eine von der Gasmenge abhängige Feststoffmenge fluidisiert wird. Diese genau zu bestimmende Feststoffmenge wird mit Hilfe der Gasmenge ausgetragen, die durch die Durchtrittsbohrungen 16 oder 17 der Ringkammer 10 eingeblasen wird. Die Ringkammer 10 stellt somit das Förderorgan dar. Wird die gesamte Gasmenge über das Verteilventil 12 auf die Ringkammer 10 gegeben, so wird wegen der fehlenden Fluidisation der Feststoffschicht kein Feststoff ausgetragen. Die eingeblasene Gasmenge dient in diesem Fall dazu, die Förderleitung 3 frei zu blasen.

Der Einsatz eines Verteilbodens 4 oder von Gasanschlüssen 8 zur Fluidisierung hängt von dem Verwendungszweck ab. Die Gasanschlüsse 8 ergeben eine flache Regelcharakteristik bei der Förderung größerer Feststoffmengen, während der Verteilboden 4 eine steile Regelcharakteristik bei der Förderung geringerer Feststoffmengen erzeugt.

Für den Fall, daß geringe Mengen an Feststoff aus der fallenden Leitung 1 ausgetragen und in die Förderleitung 3 eindosiert werden sollen, empfiehlt es sich, den Eintrittsquerschnitt der Zwischenleitung 2 zu verkleinern. Das kann dadurch geschehen, daß austauschbare Böden, die in der Höhe variieren, in den unteren Teil der fallenden Leitung 1 eingesetzt werden. Der obere Teil dieser Böden überdeckt einen Teil des Eintrittsquerschnittes der Zwischenleitung 2.

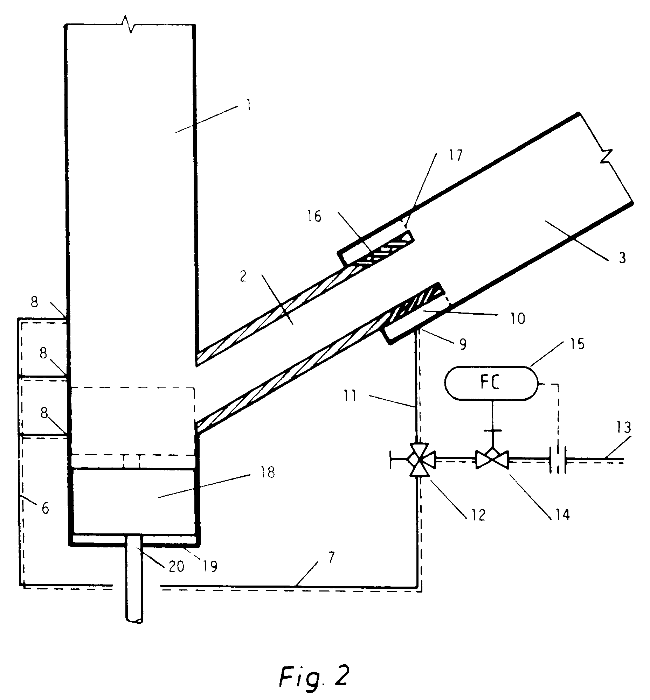

Bei der in Fig. 2 dargestellten Ausführungsform wird die Veränderbarkeit des Eintrittsquerschnittes der Zwischenleitung 2 durch einen Kolben 18 erreicht, der in dem unteren Teil der fallenden Leitung 1 höhenverstellbar angeordnet ist. Dieser Kolben 18 füllt den Querschnitt der fallenden Leitung 1 aus und ist mit einer durch den Boden 19 der fallenden Leitung 1 geführten Kolbenstange 20 versehen. Die Kolbenstange 20 ist mit einem nicht gezeigten Hubantrieb verbunden. Über diese Kolbenstange 20 ist der Kolben 18 ausgehend von der Ausgangslage unterhalb des Eintrittsquerschnittes der Zwischenleitung 2 in die gestrichelt angedeutete Lage anzuheben, in der der Kolben 18 den Eintrittsquerschnitt teilweise überdeckt. In dieser Kolbenstellung gelangt weniger Feststoff aus der fallenden Leitung 1 in die Zwischenleitung 2 und die Förderleitung 3, so daß weniger Feststoff als bei voll geöffnetem Eintrittsquerschnitt dosierbar ausgetragen wird. Die austauschbaren Böden variabler Höhe und der höhenverstellbare Kolben 18 erhöhen den Regelbereich der beschriebenen Vorrichtung.

## Patentansprüche

1. Verfahren zum Austragen von Feststoff aus einer fallenden Leitung und zum dosierten Einbringen in eine mit der fallenden Leitung über eine Umlenkung verbundenen Förderleitung, wobei Fluidisierungsgas zur teilweisen Fluidisierung der im unteren Teil der fallenden Leitung vorhandenen Feststoffschicht in die Umlenkung eingeblasen wird, dadurch gekennzeichnet, daß die teilweise fluidisierte Feststoffschicht durch das Einblasen des Fluidisierungsgases in einer von der zu fördernden Feststoffmenge abhängigen Menge soweit ausgedehnt wird, daß der Feststoff von Fördergas erfaßt wird, das zur pneumatischen Förderung des Feststoffes in die Förderleitung eingeblasen wird.

2. Verfahren nach Anspruch 1, dadurch gekennzeichnet, daß das der Fluidisierung und der Förderung des Feststoffes dienende Gas über eine gemeinsame Gasleitung in einer gleichbleibenden Gesamtmenge zugeführt und in einstellbaren Mengenverhältnissen auf die Fluidisierung und die Förderung aufgeteilt wird.

3. Vorrichtung zum Austragen von Feststoff aus einer fallenden Leitung (1) und zum dosierten Einbringen in eine Förderleitung (3), die mit der fallenden Leitung (1) über eine Umlenkung verbunden ist, wobei in dem unteren Teil der fallenden Leitung (1) ein Anschluß (5, 8) für ein Fluidisierungsgas für eine teilweise Fluidisierung der in der fallenden Leitung (1) vorhandenen Feststoffschicht vorgesehen ist, zur Durchführung des Verfahrens nach den Ansprüchen 1 und 2, dadurch gekennzeichnet, daß in der Förderleitung (3) Durchtrittsbohrungen (16, 17) für die Zuführung eines Fördergases zur pneumatischen Förderung des Feststoffes in einem Bereich vorgesehen sind, der zwischen der Oberfläche der ruhenden Feststoffschicht und der Oberfläche der durch Einblasen des Fluidisierungsgases fluidisierten Feststoffschicht liegt.

4. Vorrichtung nach Anspruch 3, dadurch gekennzeichnet, daß die Anschlüsse (6, 8, 9) für die Zuführung des Fluidisierungsgases und des Fördergases über ein Zuteilventil (12) an eine gemeinsame Gasleitung (13) angeschlossen sind.

5. Vorrichtung nach den Ansprüchen 3 und 4, dadurch gekennzeichnet, daß in dem unteren Teil der fallenden Leitung (1) ein Verteilboden (4) angeordnet ist.

6. Vorrichtung nach den Ansprüchen 3 und 4, dadurch gekennzeichnet, daß in der der Förderleitung (3) gegenüberliegenden Seitenwand der fallenden Leitung (1) Anschlüsse (8) für die Zuführung von Fluidisierungsgas angeordnet sind.

7. Vorrichtung nach den Ansprüchen 3, 4 und 6, dadurch gekennzeichnet, daß der Querschnitt auf der Eintrittsseite der Förderleitung (3) verstellbar ist.

8. Vorrichtung nach Anspruch 7, dadurch gekennzeichnet, daß in dem unteren Teil der fallenden Leitung (1) Böden unterschiedlicher Höhe austauschbar angeordnet sind.

9. Vorrichtung nach Anspruch 7, dadurch gekennzeichnet, daß in dem unteren Teil der fallenden Leitung (1) ein in axialer Richtung verschiebbarer Kolben (18) angeordnet ist.
